Europäisches Patentamt

European Patent Office

Office européen des brevets

(19)

(11) Veröffentlichungsnummer: **0 180 271**
**B1**

# EUROPÄISCHE PATENTSCHRIFT

(12)

(45) Veröffentlichungstag der Patentschrift:
**01.06.88**

(51) Int. Cl.⁴: **B 01 D 46/38**

(21) Anmeldenummer: **85201637.7**

(22) Anmeldetag: **09.10.85**

(54) Verfahren und Vorrichtung zum Regenerieren eines Granulatfilters.

(30) Priorität: **02.11.84 DE 3440143**

(43) Veröffentlichungstag der Anmeldung:
**07.05.86 Patentblatt 86/19**

(45) Bekanntmachung des Hinweises auf die Patenterteilung:
**01.06.88 Patentblatt 88/22**

(84) Benannte Vertragsstaaten:
**CH DE FR GB IT LI**

(56) Entgegenhaltungen:
**EP - A - 0 097 310**
**DE - U - 8 319 457**
**US - A - 4 142 873**
**US - A - 4 452 613**

(73) Patentinhaber: **METALLGESELLSCHAFT AG,**
**Reuterweg 14 Postfach 3724, D-6000 Frankfurt/M.1 (DE)**

(72) Erfinder: **Furlan, Pietro, Via Ripamonti 255,**
**I-20141 Milano (IT)**

(74) Vertreter: **Rieger, Harald, Dr., Reuterweg 14,**
**D-6000 Frankfurt am Main (DE)**

ACTORUM AG

## Beschreibung

Die Erfindung betrifft ein Verfahren zum Entfernen von Staub aus dem Granulat eines Granulatfilters mit mindestens einer zwischen zwei gasdurchlässigen Wänden eingeschlossenen Filterschicht aus Granulat, wobei zu entstaubendes Gas die Filterschicht durchströmt, staubhaltiges Granulat in eine Abreinigungszone gefördert, durch Sichten vom Staub weitgehend befreit und der Filterschicht wieder zugeführt wird, sowie eine Vorrichtung hierzu.

Ein Verfahren dieser Art kennt man aus dem US-Patent 4 142 873. Granulatfilter sind allgemein bekannt und z.B. in den deutschen Offenlegungsschriften 3 012 911 und 3 246 183 sowie in der US-Patentschrift 4 353 722 beschrieben. Die Filterschicht wird hierbei aus Granulat, z.b. Kies, mit einer Korngrösse im Bereich von 1 bis 5 mm gebildet. Die gasdurchlässigen Wände des Filters können aus Drahtnetzen bestehen oder z.B. jalousieartig ausgebildet sein.

Beim Verfahren der US-A- 4 142 873 fördert man das staubbeladene Granulat pneumatisch nach oben in eine Abreinigungskammer, wobei jedoch das Granulat mit hoher Geschwindigkeit gegen die Wände der Kammer prallt und dabei zum Teil zerschlagen wird. Die Folge ist ein erheblicher Verbrauch an Granulat, da Granulat-Bruchstücke für die Filterschicht nicht geeignet sind und mit dem Staub ausgetragen werden. Der Erfindung liegt die Aufgabe zugrunde, das Granulat schonend zu behandeln und das Filter gleichzeitig wenig störanfällig auszubilden. Beim eingangs genannten Verfahren geschieht dies dadurch, dass man das staubhaltige Granulat mechanisch in die über der Filterschicht befindliche Abreinigungszone fördert und einen Teilstrom des im Granulatfilter entstaubten Gases als Sichtungsgas im Gegenstrom durch das sich abwärts zur Filterschicht bewegende Granulat leitet.

Die mechanische Förderung kann zum Beispiel mit Hilfe einer Vertikalschnecke erfolgen, die für hohe Betriebssicherheit und geringen Abrieb sorgt. Vorteilhafterweise verwendet man als Sichtungsgas das im Filter selbst entstaubte Gas, das auch kurz als Reingas bezeichnet wird. Als Sichtungsgas wird nur ein geringer Teil das gesamten Reingases gebraucht, es bietet sich deshalb an, dieses Sichtungsgas nach seiner Entstaubung ausserhalb des Filters in das Granulatfilter zurückzuleiten.

Eine Weiterbildung des erfindungsgemässen Verfahrens besteht darin, dass man das Granulat im Bereich des Gegenstroms von Sichtungsgas und Granulat über mindestens ein seine Fallbewegung hemmendes Hindernis leitet. Wenn das Granulat auf dieses Hindernis aufprallt, wird anhaftender Staub abgelöst und kann vom Sichtungsgas mitgenommen werden. Das Hindernis hat im allgemeinen auch eine örtliche Verengung des Strömungsquerschnitts in der Abreinigungszone zur Folge, wodurch die Strömungsgeschwindigkeit des Sichtungsgases in erwünschter Weise ansteigt. Diese örtlich höheren Strömungsgeschwindigkeiten zusammen mit den durch ein Strömungshindernis auf das Granulat ausgeübten Impulsen sorgen für eine gute Reinigungsleistung des Sichtungsgases in der Abreinigungszone.

Vorteilhafterweise kann das mechanische Fördern des staubhaltigen Granulats in die Abreinigungszone und die Behandlung das Granulats mit Sichtungsgas kontinuierlich erfolgen, so dass der Filterbetrieb nicht unterbrochen zu werden braucht.

Zur Erfindung gehört ferner die Ausbildung des Granulatfilters, das eine mechanische Fördereinrichtung zum Fördern des staubbeladenen Granulats in eine Abreinigungskammer oberhalb der Filterschicht aufweist, das mit mindestens einer in die Abreinigungskammer mündenden Zweigleitung zum Einleiten von in der Filtgerschicht entstaubtem Gas als Sichtungsgas und mit einer von der Abreinigungskammer zu einer Entstaubungseinrichtung führenden Leitung für staubbeladenes Sichtungsgas versehen ist.

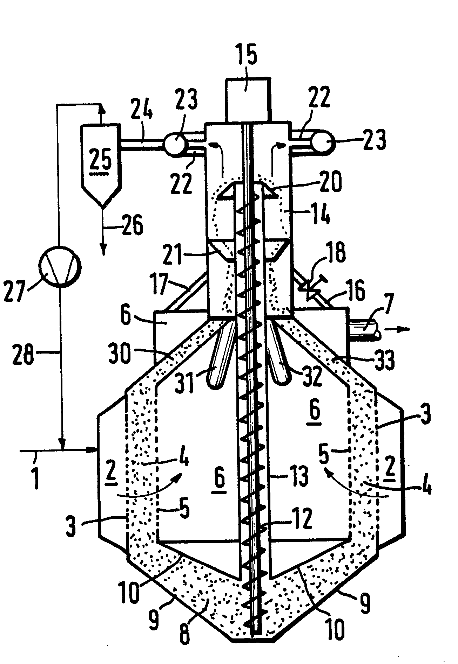

Einzelheiten des Verfahrens und des Filters werden mit Hilfe der Zeichnung erläutert. Die Zeichnung zeigt in schematischer Darstellung einen Längsschnitt durch das Granulatfilter.

Das zu entstaubende Rohgas kommt aus der Leitung 1 und strömt zunächst in eine zylindrische Rohgaskammer 2, bevor es durch eine äussere, gasdurchlässige Wand 3 in die Filterschicht 4 eindringt. Die Filterschicht 4 befindet sich zwischen der äusseren zylindrischen Wand 3 und einer innenren gasdurchlässigen Wand 5, die konzentrisch zur Wand 4 angeordnet ist. Innerhalb der Wand 5 befindet sich der Reingasraum 6, der eine Ableitung 7 für das Reingas auf weist.

Die Filterschicht 4 wird durch eine Schüttung aus Granulat gebildet, das üblicheweise Korngrössen im Bereich von 1 bis 5 mm und vorzugsweise 2 bis 4 mm aufweist. Bei dem Granulat kann es sich z.B. um Kies handeln. Das staubhaltige Granulat bewegt sich nach unten durch die Filterschicht 4 und gelangt in einen Sammelraum 8, der sich zwischen gasundurchlässigen Böden 9 und 10 befindet.

Von der tiefsten Stelle des Sammelraums 8 aus wird das staubbeladene Granulat mit Hilfe einer Schnecke 12, die von einem Rohr 13 umgeben ist, nach oben in die Abreinigungskammer 14 gefördert. Auf der Kammer 14 sitzt ein regelbarer Antrieb 15 für die Schnecke 12.

In der Abreinigungskammer 14 wird das staubbeladene Granulat mit einem geringen Teil des Reingases im Gegenstrom behandelt, wobei der Staub durch Sichten abgtrennt und ausgetragen wird. Das Sichtungsgas wird durch mehrere Zweigleitungen 16, 17 aus dem Reingasraum 6 in die Kammer 14 überführt, wobei diese Leitungen einstellbare Drosselorgane enthalten können, wie es in der Leitung 16 durch das Ventil 18 angedeutet ist.

In der Abreiningungskammer 14 fällt das staubbeladene Granulat zunächst über einen konischen Verteilerteller 20 nach aussen und unten, wobei das aufsteigende Sichtungsgas den Staub mitnimmt. Unterhalb des Verteilertellers 20 befindet sich ein Hindernis in Form eines konischen Ringes 21, auf den der Hauptteil des herabfallenden Granulats aufschlägt, wobei auch anhaftender Staub abgelöst wird. Der Ring 21 erzeugt ferner eine erwünschte Verengung des Strömungsquerschnitts für das aus den Leitungen 16 und 17 kommende Reingas und bewirkt eine gleichmässige Verteilung des Sichtungsgases über den Querschnitt der Abreinigungskammer 14.

Das aufsteigende Sichtungsgas verlässt die Kammer 14 durch mehrere Stichleitungen 22, die in eine Ringleitung 23 münden, die durch eine Verbindungsleitung 24 an einen Entstaubungszyklon 25 gekoppelt ist. Im Zyklon 25 wird das Sichtungsgas vom Staub getrennt, der den Zyklon durch die Leitung 26 verlässt. Das von Staub wieder ganz oder weitgehend befreite Sichtungsgas wird unter der Wirkung des Gebläses 27 durch die Leitung 28 dem Rohgas der Leitung 1 zugegeben.

Das in der Abreinigungskammer 14 von Staub wieder ganz oder weitgehend befreite Granulat fliesst durch mehrere Rohre 30, 31, 32 und 33 zur Wiederverwendung in die Filterschicht 4.

**Patentansprüche**

1. Verfahren zum Entfernen von Staub aus dem Granulat eines Granulatfilters mit mindestens einer zwischen gasdurchlässigen Wänden eingeschlossen Filterschicht aus Granulat, wobei zu entstaubendes Gas die Filterschicht durchströmt, staubhaltiges Granulat in eine Abreingungszone gefördert, durch Sichten vom Staub weitgehend befreit und der Filterschicht wieder zugeführt wird, dadurch gekennzeichnet, dass man das staubhaltige Granulat mechanisch in die über der Filterschicht befindliche Abreinigungszone fördert und einen Teilstrom des im Granulatfilter entstaubten Gases als Sichtungsgas im Gegenstrom durch das sich abwärts zur Filterschicht bewegende Granulat leitet.

2. Verfahren nach Anspruch 1, dadurch gekennzeichnet, dass man das Granulat im Bereich des Gegenstroms von Sichtungsgas und Granulat über mindestens ein seine Fallbewegung hemmendes Hindernis leitet.

3. Verfahren nach Anspruch 1 oder 2, dadurch gekennzeichnet, dass das mechanische Fördern des staubhaltigen Granulats in die Abreinigungszone und die Behandlung des Granulats mit Sichtungsgas kontinuierlich erfolgt.

4. Granulatfilter mit mindestens einer zwischen zwei gasdurchlässigen Wänden eingeschlossen Filterschicht (4) aus Granulat, wobei zu entstaubendes Gas die Filterschicht (4) durchströmt, staubhaltiges Granulat in eine Abreinigungszone gefördert, durch Sichten mit einem Sichtungsgas vom Staub weitgehend befreit und der Filterschicht (4) wieder zugeleitet wird, gekennzeichnet durch eine mechanische Fördereinrichtung (12) zum Fördern des staubbeladenen Granulats in eine Abreinigungskammer (14) oberhalb der Filterschicht (4), mit mindestens einer in die Abreinigungskammer mündenden Zweigleitung (16, 17) zum Einleiten von in der Filterschicht entstaubtem Gas als Sichtungsgas und mit einer von der Abreinigungskammer (14) zu einer Entstaubungseinrichtung (25) führenden Leitung, (24) für staubbeladenes Sichtungsgas.

5. Filter nach Anspruch 4, dadurch gekennzeichnet, dass sich die Fördereinrichtung, (12) in einem Rohr, (13) befindet, dessen oberes Ende einen Verteilerteller, (20) aufweist.

6. Filter nach Anspruch 4 oder 5, dadurch gekennzeichnet, dass die Abreinigungskammer, (14) mindestens ein die Fallbewegung des Granulats hemmendes Hindernis aufweist.

7. Filter nach Anspruch 6, dadurch gekennzeichnet, dass das Hindernis als konischer Ring (21) ausgebildet ist.

**Claims**

1. Process for removing dust from the granules of a granulate filter with at least one filter bed enclosed between gas-permeable walls and made of granules, the gas to be freed of dust flowing through the filter bed, dust-laden granules being delivered into a dedusting zone, largely freed of dust by sifting and carried back to the filter bed, characterised in that the dust-laden granules are delivered mechanically into the dedusting zone above the filter bed and part of the flow of the gas freed of dust in the granulate filter is conducted through the granules moving downstream to the filter bed in an inverse flow as a sifting gas.

2. Process according to Claim 1, characterides in that the granules are conducted over at least one obstacle impeding their falling movement in the area of the inverse flow of the sifting gas and granules.

3. Process according to Claim 1 or 2, characterised in that the mechanical delivery of the dust-laden granules into the dedusting zone and the treatment of the granules with sifting gas occurs continuosly.

4. Granulate filter with at least one filter bed (4) enclosed between two gas-permeable walls and made of granules, the gas to be freed of dust flowing through the filter bed (4), dust-laden granules being delivered into a dedusting zone, largely freed of dust by sifting with a sifting gas and carried back to the filter bed (4),characterised by a mechanical delivery device (12) for delivering the dust-laden granules into a dedusting chamber (14) above the filter bed (4), with at least one branch pipe (16, 17) leading into the dedusting chamber for introducing gas freed of dust in the filter as sifting gas and with a pipe (24) leading from the dedusting chamber (14) to a dust removal device (25) for dust-laden sifting gas.

5. Filter according to Claim 4, characterised in that the delivery device (12) is located in a tube (13), the upper end of which has a distributor plate (20).

6. Filter according to Claim 4 or 5, characterised in that the dedusting chamber (14) has at least one obstacle impeding the falling movement of the granules.

7. Filter according to Claim 6, characterised in that the obstacle is formed as a conical ring (21).

**Revendications**

1. Procédé pour éliminer de la poussière du granulé d'un filtre à granulé, ayant au moins une couche filtrante en granulé enfermée entre des parois perméables au gaz, le gaz à dépoussiérer passant à travers la couche filtrante, le granulé contenant de la poussière étant transporté à une zone d'épuration, étant essentiellement débarrassé de la poussière par dépoussiérage pneumatique et étant retourné à la couche filtrante, caractérisé en ce que l'on transporte le granulé contenant de la poussière mécaniquement à la zone d'épuration se trouvant au-dessus de la couche filtrante, et l'on envoie un courant partiel du gaz qui a été dépoussiéré dans le filtre à granulé, en tant que gaz de dépoussiérage, à contre-courant, à travers le granulé se déplaçant vers le bas, en direction de la couche filtrante.

2. Procédé suivant la revendication 1, caractérisé en ce que l'on envoie le granulé dans la région du contre-courant du gaz de dépoussiérage et du granulé, au-dessus d'au moins un obstacle empêchant sa chute.

3. Procédé suivant la revendication 1 ou 2, caractérisé en ce que l'on effectue le transport mécanique du granulé contenant de la poussière à la zone d'épuration et le traitement du granulé par le gaz de dépoussiérage en continu.

4. Filtre à granulé ayant au moins une couche filtrante (4) en granulé, enfermée entre deux parois perméables au gaz, du gaz à dépoussiérer passant à travers la couche filtrante (4), du granulé contenant de la poussière étant transporté à une zone d'épuration, étant débarrassé essentiellement de la poussière par dépoussiérage à l'aide d'un gaz de dépoussiérage, et étant retourné à la couche filtrante (4), caractérisé par un dispositif transporteur (12) mécanique pour transporter le granulé chargé de poussière à une chambre d'épuration (14), au-dessus de la couche filtrante (4), avec au moins un conduit de dérivation (16, 17) débouchant dans la chambre d'épuration et destiné à introduire du gaz qui a été dépoussiéré dans la couche filtrante, en tant que gaz de dépoussiérage, et avec un conduit (24) conduisant le gaz de dépoussiérage chargé de poussière de la chambre d'épuration (14) à un dispositif de dépoussiérage (25).

5. Filtre suivant la revendication 4, caractérisé en ce que le dispositif transporteur (12) se trouve dans un tube (13), dont l'extrémité supérieure comporte un plateau répartiteur (20).

6. Filtre suivant la revendication 4 ou 5, caractérisé en ce que la chambre d'épuration (14) comporte au moins un obstacle gênant la chute du granulé.

7. Filtre suivant la revendication 6, caractérisé en ce que l'obstacle est constitué sous la forme d'un anneau (21) conique.